# EUROPÄISCHE PATENTSCHRIFT

(11) **EP 0 655 313 B1**
(45) Veröffentlichungstag und Bekanntmachung des Hinweises auf die Patenterteilung: **04.03.1998**
(21) Anmeldenummer: 94117493.0
(22) Anmeldetag: 07.11.1994
(51) Int. Cl.: B29C 49/78, B29C 49/42, F15B 11/06, F15B 21/14

(54) **Mehrfachnutzung von Blasluft**
Multiple use of compressed air in blow moulding
Utilisation multiple d'air de soufflage

(30) Priorität: 26.11.1993 DE 4340291
(43) Veröffentlichungstag der Anmeldung: 31.05.1995
(73) Patentinhaber: KRUPP CORPOPLAST MASCHINENBAU GmbH, 22145 Hamburg (DE)
(72) Erfinder: Weiss, Ronald, D-22941 Bargteheide (DE)
(74) Vertreter: Klickow, Hans-Henning

(56) Entgegenhaltungen:
- DE-A- 3 111 925
- US-A- 4 488 863
- PATENT ABSTRACTS OF JAPAN vol. 18, no. 115 (M-1566) 24. Februar 1994 & JP-A-53 009 726 (HIROKAUZU YOSHIOKA) 22. November 1993

## Beschreibung

Die Erfindung betrifft ein Verfahren zur Formung eines Behälters aus einem thermoplastischen Kunststoff, bei dem ein Vorformling nach einer Temperierung einer Blasstation zugeführt wird, die eine Blasform aufweist, die zur Konturgebung des Behälters vorgesehen ist und in die der temperierte Vorformling eingesetzt wird und bei dem durch Zuführung von Hochdruckblasluft der Vorformling aufgeweitet wird sowie bei dem mindestens ein weiterer pneumatischer Arbeitsschritt mit Niederdruckluft durchgeführt wird, die einer Niederdruckluftversorgung entnommen wird, die ein geringeres Druckniveau als die Hochdruckblasluft aufweist und bei dem nach einer Expansion des Vorformlings aus dem in der Blasform gehalterten geformten Behälter herausströmende Hochdruckblasluft während einer Übergangsphase der Niederdruckluftversorgung zugeführt wird und bei dem im Bereich der Niederdruckluftversorgung eine Drucküberwachung zur Begrenzung eines maximal bereitgestellten Niederluftdruckes durchgeführt wird und bei dem nach der Übergangsphase eine Entlüftung des in der Blasform gehaltenen Behälters gegenüber einem Umgebungsdruck durchgeführt wird sowie bei dem der Vorformling während seiner Formung zum Behälter in Richtung einer Längsachse gereckt wird.

Die Erfindung betrifft darüber hinaus eine Vorrichtung zur Formung eines Behälters aus einem thermoplastischen Kunststoff, die mindestens eine zur Aufnahme eines temperierten Vorformlings vorgesehene Blasstation aufweist, die mit einer Form versehen ist, die eine an den zu formenden Behälter angepaßte Innenkontur aufweist und die zur Expansion des Vorformlinges mit einer Hochdruckblasluftversorgung versehen ist und bei der mindestens ein Bauelement im Bereich der Blasstation zur Betätigung mit einer Niederdruckluftversorgung verbunden ist, in der Niederdruckluft bereitgestellt ist, die ein geringeres Druckniveau als im Bereich der Hochdruckblasluftversorgung bevorratete Hochdruckblasluft aufweist und bei der im Bereich eines Verbindungselementes, das die Blasstation an die Blasluftversorgung anschließt, eine Umschaltung angeordnet ist, die während einer Hauptblasphase Hochdruckblasluft in den Bereich der Blasstation leitet und nach einer Beendigung der Hauptblasphase während einer Übergangsphase eine Verbindung zwischen der Blasstation und der Niederdruckluftversorgung zur Blasluftüberleitung ausbildet und bei der die Blasstation an ein Freischaltelement angeschlossen ist, das nach einer Beendigung des Blasvorganges den Behälterinnenraum gegenüber einem Umgebungsdruck entlüftet und bei der die Niederdruckluftversorgung einen Druckbegrenzer zur Überwachung eines maximalen Druckes der Niederdruckluft aufweist.

Die Formung eines derartigen Behälters kann beispielsweise derart erfolgen, daß zunächst ein Vorformling aus Polyäthylenterephthalat (PET) im Spritzgußverfahren hergestellt wird, nach einer Zwischenlagerung der Vorformling erhitzt und anschließend der Blasstation zugeführt wird. Es ist aber auch bekannt, Behälter nach dem Spritz-Blas-Verfahren herzustellen, bei dem ohne Zwischenschaltung einer Erwärmung der Vorformling unmittelbar nach seiner Produktion und nach Erreichen einer ausreichenden Stabilität der Blasstation zugeführt wird. Schließlich ist es auch bekannt, Vorformlinge aus Rohrabschnitten herzustellen, die im Bereich ihres einen Endes verschlossen und im Bereich ihres anderen Endes mit einem geeigneten Mündungsstück versehen werden.

Gemeinsam ist allen Verfahren, daß der Vorformling eine kleinere Gestalt aufweist, als der herzustellende Behälter. Der Vorformling wird deshalb innerhalb der Blasstation mit Druckluft beaufschlagt, um ihn zum herzustellenden Behälter umzuformen. Bei diesem Aufblasvorgang erfolgt zusätzlich zur Verringerung der Wandstärke durch die Oberflächenvergrößerung eine Orientierung des Materials. Dies führt dazu, daß die dünne Wandung des Behälters eine sehr hohe Form-stabilität aufweist, die den Behälter für eine Vielzahl von Verwendungen geeignet macht.

Zur Durchführung des Blasvorganges sind unterschiedliche Verfahren bekannt. Zum einen ist es möglich, einen einheitlichen Blasdruck zu verwenden, der in den aufzublasenden Vorformling eingeleitet und nach einer ausreichenden Ausformung aus dem fertiggestellten Behälter gegen einen Umgebungsdruck abgelassen wird. Es ist ebenfalls bereits bekannt, zunächst eine Voraufweitung des Vorformlings, die diesen bereits relativ weit an die Form des herzustellenden Behälters annähert, mit einem geringeren Druck durchzuführen, und erst die Ausprägung der feineren Kontur des Behälters mit einem höheren Druck vorzunehmen. Auch bei diesem Verfahren wird nach der Fertigung des Behälters die Blasluft gegen einen Umgebungsdruck entlüftet.

Bei Hochleistungsblasmaschinen, deren übliche Ausstoßleistung im Bereich von 2.000 Flaschen pro Stunde bis 20.000 Flaschen pro Stunde liegt und bei denen das Behältervolumen üblicherweise im Bereich von 0,5 bis 3 l liegt, werden somit erhebliche Mengen an Druckluft benötigt. Zur Bereitstellung der Druckluft sind deshalb leistungsstarke Kompressoren erforderlich, die zum einen aufgrund ihrer Leistungsstärke einen hohen Anschaffungspreis haben und zum anderen durch die Luftkompression mit einer erheblichen Energie gespeist werden müssen.

Ein weiterer Nachteil eines hohen Druckluftverbrauches liegt darin, daß bei der Entlüftung des fertiggestellten Behälters hohe Strömungsgeschwindigkeiten auftreten, um eine hohe Produktionsgeschwindigkeit zu ermöglichen. Die hohen Strömungsgeschwindigkeiten bei der Entlüftung machen aber leistungsstarke Schalldämpfer erforderlich, die wiederum zu einer Erhöhung der Baukosten beitragen. Darüber hinaus entsteht trotz des Einsatzes der Schalldämpfer ein relativ hohes Geräuschniveau.

Aus der US-A-4 488 863 ist es bereits bekannt, im Bereich der Blasformung von Behältern eine Rückführung von Blasluft vorzusehen. Behälter werden mit Blasluft expandiert, die den Behältern mit mindestens zwei unterschiedlichen Druckniveaus zugeführt wird. Aus dem Behälter abfließende Blasluft eines höheren Druckniveaus wird in den Bereich der Blasluft eines niedrigeren Druckniveaus übergeleitet.

Aus der DE-A-31 11 925 ist es bekannt, im Bereich von Thermoformmaschinen eine Drucklufteinsparung dadurch vorzunehmen, daß nach einem Formvorgang aus dem zu formenden Produkt abfließende Druckluft gespeichert und anschließend weiteren Verbrauchern zugeleitet wird. Insbesondere ist daran gedacht, mit der abfließenden Druckluft pneumatische Arbeitsvorgänge von Nebengeräten zu speisen.

Aus der Veröffentlichung "PATENT ABSTRACTS OF JAPAN", vol. 18, no. 115 (M-1566) 24. Februar 1994 & JP-A-53 009 726 (HIROKAUZU YOSHIOKA) 22. November 1993 ist es ebenfalls bekannt, eine Kopplung zwischen einem System mit einem höheren Druckniveau und einem System mit einem niedrigeren Druckniveau vorzunehmen. Durch eine spezielle Ventilansteuerung wird aus einer Formvorrichtung abfließende Druckluft in das System mit dem niedrigeren Druckniveau übergeleitet.

Aufgabe der vorliegenden Erfindung ist es, ein Verfahren der einleitend genannten Art derart zu verbessern, daß der Verbrauch an Hochdruckblasluft reduziert wird.

Diese Aufgabe wird erfindungsgemäß dadurch gelöst, daß der Vorformling von einer Reckstange gereckt wird, die von einem Reckzylinder positioniert wird, daß die Blasform mit zwei relativ zueinander beweglichen Formhälften versehen wird, daß der Vorformling im Spritzgußverfahren hergestellt, danach zwischengelagert und anschließend temperiert wird und daß die Übergangsphase nach einer Ausformung der Kontur des Behälters und vor einer Herstellung einer Formstabilität durch Abkühlung durchgeführt wird und daß nach Erreichen der Formstabilität des Behälters der Druck auf Umgebungsdruck reduziert und anschließend der Behälter aus der Blasform entnommen wird.

Weitere Aufgabe der vorliegenden Erfindung ist es, eine Vorrichtung der einleitend genannten Art derart zu konstruieren, daß mit einem geringen apparativen Aufwand eine Reduktion des Verbrauches an Hochdruckblasluft erfolgen kann.

Diese Aufgabe wird erfindungsgemäß dadurch gelöst, daß zur Reckung des Vorformlinges im Bereich der Blasstation eine Reckstange und ein die Reckstange positionierenden Reckzylinder angeordnet sind, daß die Blasform mit zwei relativ zueinander beweglichen Formhälften versehen ist und daß eine Steuerung für den Druckverlauf derart ausgebildet ist, daß die Übergangsphase nach einer Ausformung der Kontur des Behälters und vor einer Herstelung einer Formstabilität durch Abkühlung durchgeführt wird.

Durch die Überleitung von Hochdruckblasluft in den Niederdruckbereich wird in einem normalen Betriebszustand eine separate Bereitstellung von Niederdruckluft entbehrlich. Die relativ größte Einsparung läßt sich bei einer geringen Druckdifferenz der Drücke realisieren. Bei einem realistischen Druckverhältnis von 2:1 beträgt die Einsparung etwa 20%. Die abschließende Entlüftung gegen den Umgebungsdruck verhindert eine Gefährdung durch ungenügenden Druckabbau. Durch den Druckbegrenzer wird ein vorgebbares Druckniveau eingehalten.

Bei der Entlüftung gegen den Umgebungsdruck braucht nur noch ein relativ geringer Druckunterschied abgebaut werden, so daß eine erhebliche Reduzierung der Geräuschemissionen erfolgt. Vor der Entlüftung gegen den Umgebungsdruck kann noch eine zusätzliche Drucküberleitung in ein Arbeitsluftsystem mit einem Druckniveau unterhalb der Niederdruckluftversorgung für eine erste Blasstufe erfolgen.

Zur Bereitstellung eines definierten Druckniveaus im Bereich der Niederdruckluftversorgung sowie zur Gewährleistung einer Unabhängigkeit von unterschiedlichen Druckverhältnissen bei einem Anlauf sowie bei Störungen wird vorgeschlagen, daß die Niederdruckluftversorgung mit einer separaten und von einer Druckluftüberleitung aus dem Bereich der Blasstation unabhängigen Niederdruckluftversorgung versehen wird.

Für die Durchführung der Formung des Behälters ist vorgesehen, daß der Vorformling während seiner Formung zum Behälter in Richtung einer Längsachse gereckt wird. Hierdurch können günstige Orientierungsverhältnisse beim fertiggestellten Behälter erzeugt werden.

Zur Unterstützung einer zweckmäßigen Materialverteilung im Bereich des Behälters wird vorgeschlagen, daß dem Behälter vor der Zuführung von Hochdruckblasluft Niederdruckluft zur Voraufweitung zugeführt wird.

Zur ausreichenden Fixierung des Behälters innerhalb der Blasform wird vorgeschlagen, daß nach einer Durchführung der Überleitungsphase innerhalb des Behälters ein Druckniveau aufrechterhalten wird, das dem Druckniveau innerhalb der Niederdruckluftversorgung entspricht.

Ein zweckmäßiges Druckintervall für die Hochdruckblasluft wird dadurch bereitgestellt, daß durch die Hochdruckblasluftversorgung der Behälter mit einem Druck im Bereich von 25 - 40 bar beaufschlagt wird.

Bei einer Verwendung der Niederdruckluftversorgung zur Blasluftversorung des Behälters ist es zweckmäßig, daß der Behälter durch die Niederdruckluftversorgung mit einem Druck im Bereich von 10 - 25 bar beaufschlagt wird.

Eine andere Variante des Verfahrens besteht darin, daß die Niederdruckluftversorgung zur Speisung von pneumatischen Bauelementen verwendet wird, die Positionierbewegungen durchführen. Bei einer derartigen Ausführungsform ist es in der Regel zweckmäßig, für die Niederdruckluft ein Druckintervall im Bereich von 2 - 8 bar vorzusehen.

Eine Optimierung der Prozeßzeit kann dadurch erfolgen, daß die Übergangsphase nach einer Ausformung der Kontur des Behälters und vor einer Herstellung einer Formstabilität durch Abkühlung durchgeführt wird. Hierdurch ist es insbesondere möglich, vor einer Entlüftung des Behälters den Druck innerhalb des Behälters bereits soweit abzusenken, daß die eigentliche Entlüftungsphase relativ kurz gestaltet werden kann. Bei einer vorgegebenen Länge des gesamten Zeitintervalles kann hierdurch die eigentliche Prozeßzeit verlängert werden, da für die Entlüftung ein geringerer Zeitbedarf besteht. Die Abkühlung kann beispielsweise durch Anlage an der Form erfolgen.

Ein kompakter Aufbau kann dadurch realisiert werden, daß zur Durchführung der pneumatischen Umschaltvorgänge schaltbare Ventil verwendet werden.

Eine einfache elektronische Steuerung wird dadurch unterstützt, daß die Ventile als elektromagnetische Ventile ausgebildet sind.

Eine von elektronischen Bauteilen unabhängige Steuerung kann auch dadurch bereitgestellt werden, daß zur Durchführung der pneumatischen Umschaltungen eine Steuerscheibe vorgesehen ist, die mit Luftnuten versehen ist, die in Segmente mit unterschiedlichen Druckbeaufschlagungen unterteilt ist und daß relativ zur Steuerscheibe eine Abnehmerscheibe mit Abnahmebohrungen rotiert.

Zur Vergleichmäßigung der Druckverhältsnisse wird vorgeschlagen, daß im Bereich der Niederdruckluftversorgung ein Druckluftspeicher angeordnet ist.

Zur Verhinderung von großen Druckschwankungen im Bereich der Niederdruckluftversorgung durch die Blasluftüberleitung ist es zweckmäßig, daß im Bereich der Überleitung ein Druckminderer angeordnet ist, der mindestens bereichsweise den Druckbegrenzer ausbildet.

In der Zeichnung sind Ausführungsbeispiele der Erfindung schematisch dargestellt. Es zeigen:

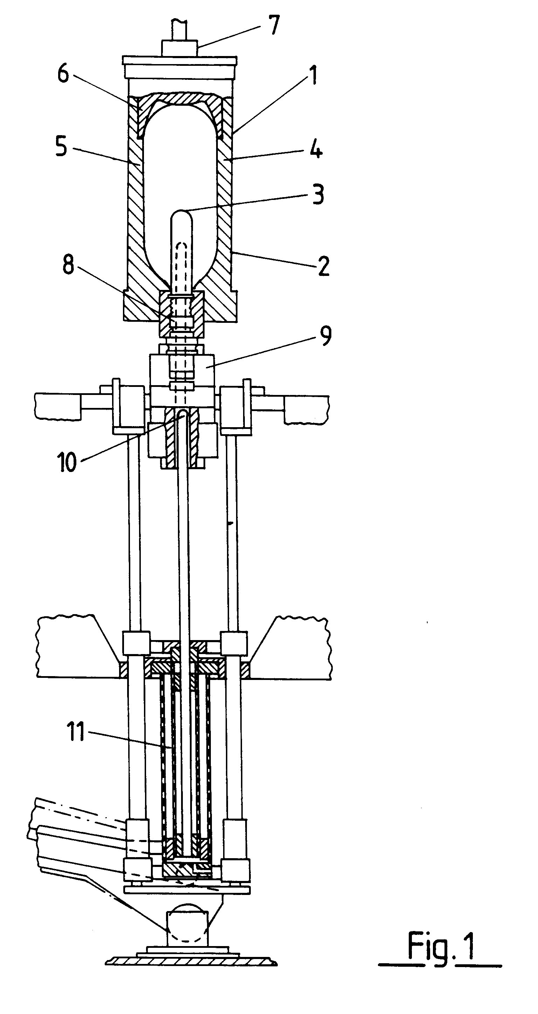

- Fig. 1: eine teilweise geschnittene Prinzipdarstellung einer Blasstation mit Reckeinrichtung,
- Fig. 2: eine Prinzipdarstellung eines Druckverlaufes beim Blasen eines Behälters nach dem Stand der Technik und nach einer speziellen Ausführungsform des erfindungsgemäßen Verfahrens,
- Fig. 3: ein Blockschaltbild zur Veranschaulichung der wesentlichen Funktionskomponenten,
- Fig. 4: ein Prinzipschaltbild einer rotierenden Steuerscheibe mit nutförmigen Luftleitbereichen
**und**
- Fig. 5: eine prinzipielle Darstellung des Verfahrens bei einer Überleitung von Druckluft aus einem höheren Druckluftbereich in einen niedrigeren Druckluftbereich nach der Ausprägung des Behälters.

Die Vorrichtung zur Formung eines Behälters besteht im wesentlichen aus einer Blasstation (1), die mit einer Form (2) versehen ist, in die ein Vorformling (3) einsetzbar ist. Der Vorformling (3) kann ein spritzgegossenes Teil aus Polyäthylenterephthalat sein. Zur Ermöglichung eines Einsetzens des Vorformlings (3) in die Form (2) und zur Ermöglichung eines Herausnehmens des fertigen Behälters besteht die Form (2) aus Formhälften (4,5) und einem Bodenteil (6), das von einer Hubvorrichtung (7) positionierbar ist. Der Vorformling (3) kann im Bereich der Blasstation (1) von einem Transportdorn (8) gehalten sein, der gemeinsam mit dem Vorformling (3) eine Mehrzahl von Behandlungsstationen innerhalb der Vorrichtung durchläuft. Es ist aber auch möglich, den Vorformling (3) beispielsweise über Zangen oder andere Handhabungsmittel direkt in die Form (2) einzusetzen.

Zur Ermöglichung einer Druckluftzuleitung ist unterhalb des Transportdornes (8) ein Anschlußkolben (9) angeordnet, der dem Vorformling (3) Druckluft zuführt und gleichzeitig eine Abdichtung relativ zum Transportdorn vornimmt. Bei einer abgewandelten Konstruktion ist es grundsätzlich aber auch denkbar, feste Druckluftzuleitungen zu verwenden.

Eine Reckung des Vorformlinges (3) erfolgt mit Hilfe einer Reckstange (10), die von einem Zylinder (11) positioniert wird. Grundsätzlich ist es aber auch denkbar, eine mechanische Positionierung der Reckstange (10) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (1) auf einem rotierenden Blasrad angeordnet sind. Eine Verwendung von Zylindern (11) ist zweckmäßig, wenn ortsfest angeordnete Blasstationen (1) vorgesehen sind.

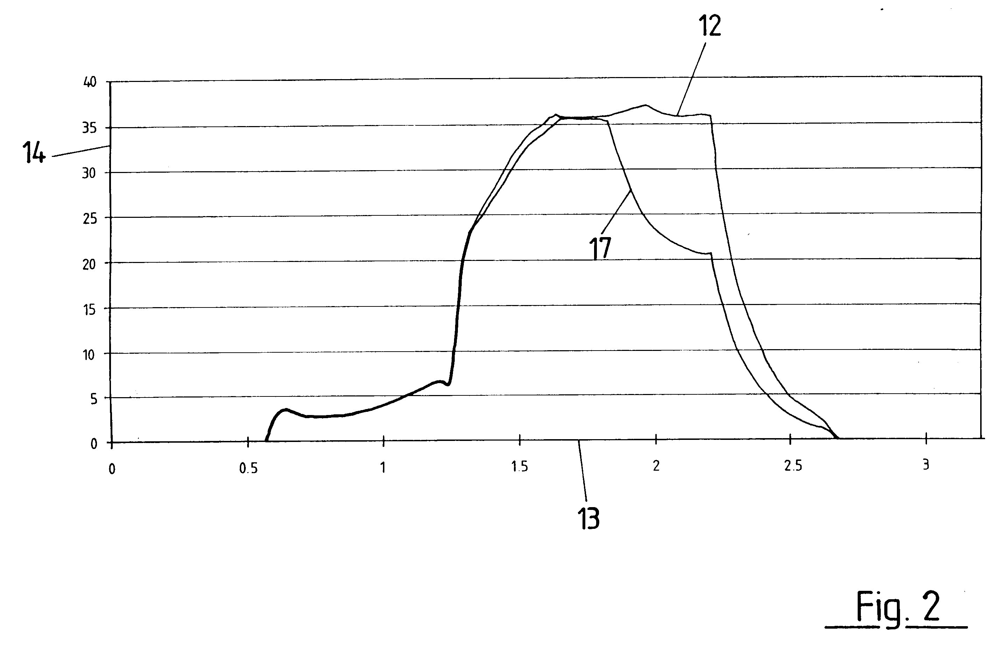

Fig. 2 zeigt zwei Druckdiagramme zur Veranschaulichung einer Variante der Erfindung. Ein Druckluftverlauf (12) ist in einem Koordinatenkreuz dargestellt, daß aus einer Zeitachse (13) und einer Druckachse (15) ausgebildet ist. Die Druckachse (14) ist in bar und die Zeitachse (13) in Sekunden skaliert. Bis zu einem Zeitpunkt von etwa 1,25 sec. wird ein Blasdruck aus einer Niederdruckluftversorgung zugeführt. Die Niederdruckluftversorgung hat ein Druckniveau im Bereich von etwa 10 - 25 bar. Im Bereich des zu formenden Behälters stellt sich jedoch innerhalb dieses Zeitraumes nicht dieser Versorgungsdruck ein, da durch die Expansion des Vorformlings (3) und der hieraus resultierenden Volumenvergrößerung Druckluft nachströmt und durch die vorhandenen Strömungswiderstände eine entsprechende Druckreduktion hervorgerufen wird. Ab dem Zeitpunkt von etwa 1,25 sec. wird Druckluft aus einer Hochdruckblasluftversorgung (16) zugeführt. Nach ca. 1,7 sec. erreicht der Druck innerhalb des herzustellenden Behälters etwa seinen Endwert, der hier ca. 36 bar beträgt. Ein typisches Intervall für den Druck in der Hochdruckblasluftversorgung (16) beträgt 25 - 40 bar.

Nach ca. 2,2 sec. wird die Druckluftzufuhr aus der Hochdruckblasluftversorgung (16) beendet und eine Entlüftung gegenüber einem Umgebungsdruck durchgeführt. Der Entlüftungsvorgang ist nach ca. 2,7 sec. beendet. Alle angegebenen Zeitwerte bezogen sich hierbei auf den Ursprung des Koordinatenkreuzes aus der Zeitachse (13) und der Druckachse (14).

Gegenüber dem Druckverlauf (12), der weitgehend dem Stand der Technik entspricht, weist ein modifizierter Druckluftverlauf (17), erhebliche Unterschiede auf. Bis zu einem Zeitpunkt von etwa 1,3 sec. sind die Druckluftverläufe (12,17) in etwa deckungsgleich. Ab diesem Zeitpunkt verläuft der modifizierte Druckluftverlauf (17) zunächst steiler, schneidet jedoch dann den Druckluftverlauf (12) bei etwa 1,7 sec. Nach etwa 1,8 sec. wird beim modifizierten Druckluftverlauf der Druck innerhalb des Behälters reduziert. Es findet dabei ein Übergang von Druckluft aus dem Behälter in die Niederdruckluftversorgung (15) statt. Ab etwa 2,2 sec. wird auch gemäß dem modifizierten Druckluftverlauf (17) gegenüber einem Umgebungsdruck entlüftet. Grundsätzlich ist es denkbar, den abschließenden Entlüftungsschritt in zwei Teilschritte zu teilen, bei denen in einem ersten Teilschritt nochmals eine Entlüftung gegenüber einem für eine weitere Verwendung vorgesehenen niedrigeren Druckniveau erfolgt, und erst in einer Abschlußphase die Entlüftung gegenüber dem Umgebungsdruck durchgeführt wird.

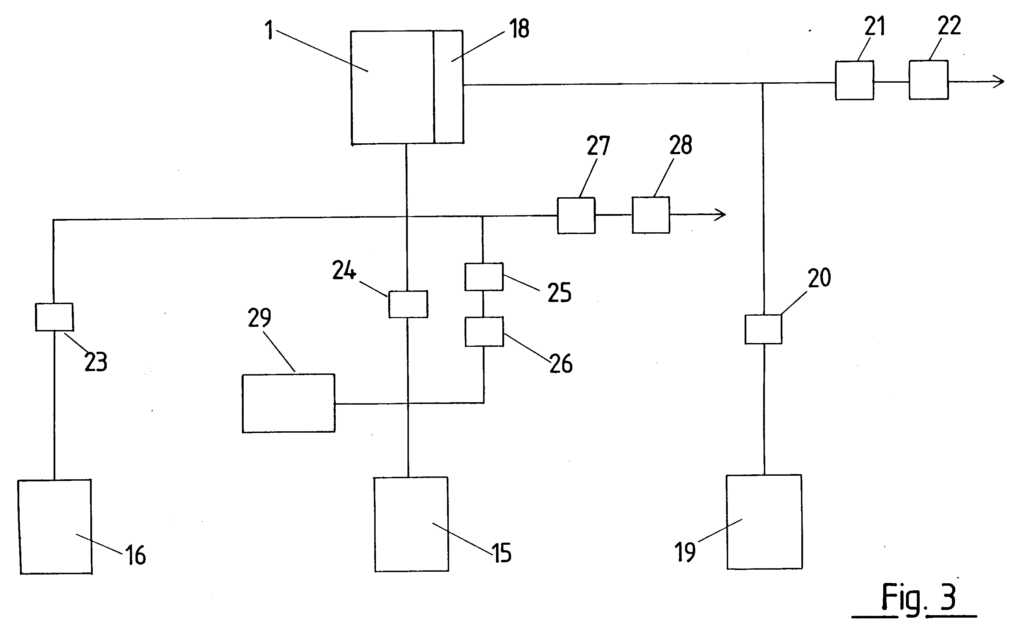

Zur weiteren Veranschaulichung ist in Fig. 3 ein Blockschaltbild mit den wesentlichen funktionellen Komponenten dargestellt, das den Ablauf bei einer Verwendung von Schaltventilen wiedergibt. Die Blasstation (1) ist hierbei mit einer Antriebspneumatik (18) versehen, die von einer Arbeitsluftversorgung (19) gespeist wird. Zur Zuführung von Arbeitsluft sind ein Arbeitsluftventil (20) und zur Druckabfuhr ein Arbeitsluftentlüftungsventil (21) vorgesehen. Eine Minderung der Geräuschemissionen erfolgt mit Hilfe eines Arbeitsluftschalldämpfers (22). Statt der Antriebspneumatik (18) können aber grundsätzlich auch mechanische, hydraulische oder elektrische Antriebe verwendet werden.

Die Hochdruckblasluftversorgung (16) ist über ein Hochdruckventil (23) an die Blasstation (1) angeschlossen. Der Anschluß der Niederdruckluftversorgung (15) erfolgt über ein Niederdruckventil (24). Das Niederdruckventile (24) ist von einem Druckminderer (25) und einem Rückführventile (26) überbrückt. Eine Entlüftung der Blasstation (1) erfolgt über ein Blasluftentlüftungsventil (27) und einen Blasluftschalldämpfer (28). Eine Rückführung kann auch direkt über das Niederdruckluftventil (24) erfolgen.

Ein typischer Verfahrensschritt kann derart durchgeführt werden, daß zunächst Druckluft aus der Niederdruckblasluftversorgung (15) in den Bereich der Blasstation (1) geleitet wird, anschließend eine Zufuhr von Druckluft aus der Hochdruckblasluftversorgung (16) erfolgt und nach einer ausreichenden Ausprägung des Behälters, jedoch vor Erreichen einer Formstabilität, eine Entlüftung gegen die Niederdruckluftversorgung (15) durchgeführt wird. Hierzu ist das Hochdruckventil (23) geschlossen. Die Zufuhr von Druckluft aus dem Bereich der Blasstation (1) in den Bereich der Niederdruckluftversorgung (15) kann unmittelbar über das Niederdruckventil (24) erfolgen. Zur Vermeidung von zu hohen Drucküberleitungen ist es aber auch denkbar, das Niederdruckventil (24) zu schließen und die Druckluftüberleitung über eine Reihenschaltung eines Druckminderers (25) und eines Rückführventils (26) durchzuführen. Eine weitere Abpufferung von Druckschwankungen kann durch einen Druckluftspeicher (29) erfolgen.

Die Ventile können beispielsweise als schaltbare elektromagnetische Ventile ausgebildet sein. Statt derartiger Ventile können die pneumatischen Schaltvorgänge aber auch über eine Steuerscheibe (30) durchgeführt werden, die mit Luftnuten (31) versehen ist. Korrespondierend zur Steuerscheibe (30) ist eine Abnehmerscheibe (32) angeordnet, die relativ zur Steuerscheibe (30) rotiert. Die Luftnuten (31) der Steuerscheibe (30) erstrecken sich im wesentlichen zentrisch zu einem Mittelpunkt (33). Im Bereich der Abnehmerscheibe (32) sind Abnahmebohrungen (34) angeordnet, die über Anschlußleitungen mit der Blasstation (1) verbunden sind.

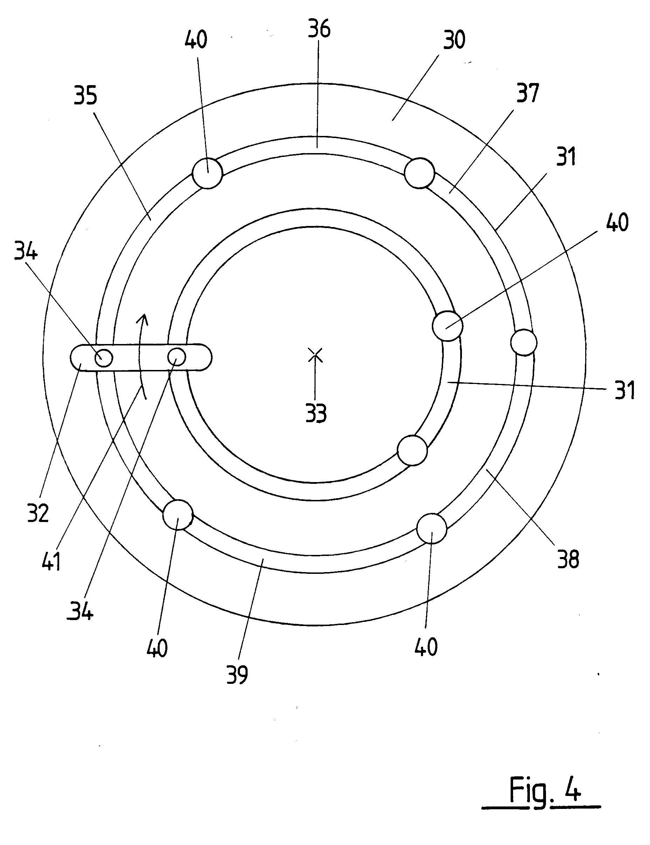

Die im Ausführungsbeispiel gemäß Fig. 4 in radialer Richtung außen eingezeichnete Luftnut (31) ist in einen Drucklosbereich (35), einen Niederdruckbereich (36), einen Hochdruckbereich (37), einen Rückführbereich (38) sowie einen Entlüftungsbereich (39) unterteilt. Zur Gewährleistung einer günstigen fertigungstechnischen Realisierung ist die Luftnut (31) radial durchgehend ausgebildet und durch Trennelemente (40) in die Bereiche (35,36,37,38,39) unterteilt. Bei einer Rotation der Abnahmescheibe (32), von der in Fig. 4 lediglich ein kleines Segment dargestellt ist, in Richtung der Drehorientierung (41) werden die Bereiche (35,36,37,38,39) nacheinander durchlaufen und es wird eine pneumatische Funktion ausgeübt, die weitgehend der Funktion entsprechend zu Fig. 3 äquivalent ist.

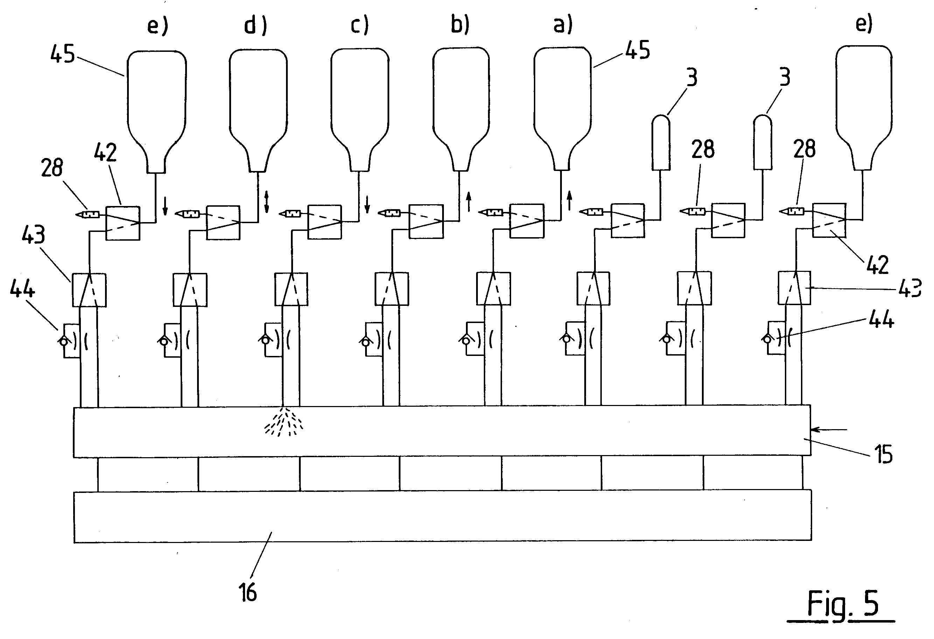

Eine weitere Variante zur Realisierung des Verfahrens ist in Fig. 5 dargestellt. Der Anschluß der Blasstation (1) an die Niederdruckluftversorgung (15) und die Hochdruckluftversorgung (16) erfolgt hier über 3/2-Wegeventile (42,43) sowie Drosselrückschlagventile (44). Aus dem Vorformling (3) wird in einer ersten Prozeßstufe a) durch Zuführung von Druckluft aus der Niederdruckluftversorgung (15) der Behälter (45) geformt. Zur Vereinfachung wurde in Fig. 5 nur der Behälter (45), und nicht die ihn umschließende Blasstation (41) dargestellt. Der Prozeßschritt a) kann beispielsweise mit einem Druck von 15 bar durchgeführt werden.

Gleichzeitig oder der Druckluftzufuhr voreilend wird die Reckstange (10) in den Vorformling (3) eingeführt.

Im Prozeßschritt b) wird der Druckluft aus der Hochdruckblasluftversorgung (16) zugeführt. Dies kann beispielsweise mit 38 bar erfolgen. Im Prozeßschritt c) wird der Behälter (45) relativ zur Niederdruckluftversorgung (15) entlüftet und es findet eine Druckreduzierung bis auf ein Niveau von etwa 15 bar statt.

Im Prozeßschritt d) wird der Druck von 15 bar solange gehalten, bis der Behälter (45) durch Abkühlung, beispielsweise durch Formanlage, eine ausreichende Formstabilität aufweist. Im Prozeßschritt e) wird der Druck auf den Umgebungsdruck reduziert und der Behälter (45) kann aus der Blasstation (1) entnommen werden.

## Patentansprüche

1. Verfahren zur Formung eines Behälters (45) aus einem thermoplastischen Kunststoff, bei dem ein Vorformling (3) nach einer Temperierung einer Blasstation (1) zugeführt wird, die eine Blasform (2) aufweist, die zur Konturgebung des Behälters (45) vorgesehen ist und in die der temperierte Vorformling eingesetzt wird und bei dem durch Zuführung von Hochdruckblasluft der Vorformling (3) aufgeweitet wird sowie bei dem mindestens ein weiterer pneumatischer Arbeitsschritt mit Niederdruckluft durchgeführt wird, die einer Niederdruckluftversorgung entnommen wird, die ein geringeres Druckniveau als die Hochdruckblasluft aufweist und bei dem nach einer Expansion des Vorformlings (3) aus dem in der Blasform (2) gehalterten geformten Behälter (45) herausströmende Hochdruckblasluft während einer Übergangsphase der Niederdruckluftversorgung (15) zugeführt wird und bei dem im Bereich der Niederdruckluftversorgung (15) eine Drucküberwachung zur Begrenzung eines maximal bereitgestellten Niederluftdruckes durchgeführt wird und bei dem nach der Übergangsphase eine Entlüftung des in der Blasform (2) gehaltenen Behälters (45) gegenüber einem Umgebungsdruck durchgeführt wird sowie bei dem der Vorformling (3) während seiner Formung zum Behälter (45) in Richtung einer Längsachse gereckt wird, dadurch gekennzeichnet, daß der Vorformling (3) von einer Reckstange (10) gereckt wird, die von einem Reckzylinder (11) positioniert wird, daß die Blasform (2) mit zwei relativ zueinander beweglichen Formhälften (4,5) versehen wird, daß der Vorformling (3) im Spritzgußverfahren hergestellt, danach zwischengelagert und anschließend temperiert wird und daß die Übergangsphase nach einer Ausformung der Kontur des Behälters (45) und vor einer Herstellung einer Formstabilität durch Abkühlung durchgeführt wird und daß nach Erreichen der Formstabilität des Behälters (45) der Druck auf Umgebungsdruck reduziert und anschließend der Behälter (45) aus der Blasform (2) entnommen wird.

2. Verfahren nach Anspruch 1 dadurch gekennzeichnet, daß die Niederdruckluftversorgung (15) mit einer separaten und von einer Druckluftüberleitung aus dem Bereich der Blasstation (1) unabhängigen Niederdruckluftversorgung versehen wird.

3. Verfahren nach Anspruch 1 oder 2, dadurch gekennzeichnet, daß dem Behälter (45) vor der Zuführung von Hochdruckblasluft Niederdruckluft zur Voraufweitung zugeführt wird.

4. Verfahren nach einem der Ansprüche 1 bis 3, dadurch gekennzeichnet, daß nach einer Durchführung der Überleitungsphase innerhalb des Behälters (45) ein Druckniveau aufrechterhalten wird, das dem Druckniveau innerhalb der Niederdruckluftversorgung (15) entspricht.

5. Verfahren nach einem der Ansprüche 1 bis 4, dadurch gekennzeichnet, daß durch die Hochdruckblasluftversorgung (16) der Behälter mit einem Druck im Bereich von 25 - 40 bar beaufschlagt wird.

6. Verfahren nach einem der Ansprüche 1 bis 5, dadurch gekennzeichnet, daß der Behälter durch die Niederdruckluftversorgung (15) mit einem Druck im Bereich von 10 - 25 bar beaufschlagt wird.

7. Verfahren nach einem der Ansprüche 1 bis 6, dadurch gekennzeichnet, daß die Niederdruckluftversorgung (15) zur Speisung von pneumatischen Bauelementen verwendet wird, die Positionierbewegungen durchführen.

8. Vorrichtung zur Formung eines Behälters (45) aus einem thermoplastischen Kunststoff, die mindestens eine zur Aufnahme eines temperierten Vorformlings (3) vorgesehene Blasstation (1) aufweist, die mit einer Form (2) versehen ist, die eine an den zu formenden Behälter (45) angepaßte Innenkontur aufweist und die zur Expansion des Vorformlinges (3) mit einer Hochdruckblasluftversorgung (16) versehen ist und bei der mindestens ein Bauelement im Bereich der Blasstation (1) zur Betätigung mit einer Niederdruckluftversorgung (15) verbunden ist, in der Niederdruckluft bereitgestellt ist, die ein geringeres Druckniveau als im Bereich der Hochdruckblasluftversorgung (16) bevorratete Hochdruckblasluft aufweist und bei der im Bereich eines Verbindungselementes, das die Blasstation (1) an die Blasluftversorgung anschließt, eine Umschaltung angeordnet ist, die während einer Hauptblasphase Hochdruckblasluft in den Bereich der Blasstation (1) leitet und nach einer Beendigung der Hauptblasphase während einer Übergangsphase eine Verbindung zwischen der Blasstation (1) und der Niederdruckluftversorgung (15) zur Blasluftüberleitung ausbildet und bei der die Blasstation (1) an ein Freischaltelement angeschlossen ist, das nach einer Beendigung des Blasvorganges den Behälterinnenraum gegenüber einem Umgebungsdruck entlüftet und bei der die Niederdruckluftversorgung (15) einen Druckbegrenzer zur Überwachung eines maximalen Druckes der Niederdruckluft aufweist, dadurch gekennzeichnet, daß zur Reckung des Vorformlinges (3) im Bereich der Blasstation (1) eine Reckstange (10) und ein die Reckstange (10) positionierenden Reckzylinder (11) angeordnet sind, daß die Blasform (2) mit zwei relativ zueinander beweglichen Formhälften (4,5) versehen ist und daß eine Steuerung für den Druckverlauf derart ausgebildet ist, daß die Übergangsphase nach einer Ausformung der Kontur des Behälters (45) und vor einer Herstellung einer Formstabilität durch Abkühlung durchgeführt wird.

9. Vorrichtung nach Anspruch 8, dadurch gekennzeichnet, daß zur Durchführung der pneumatischen Umschaltvorgänge schaltbare Ventile (23,24) verwendet werden.

10. Vorrichtung nach Anspruch 9, dadurch gekennzeichnet, daß die Ventile (23,24) als elektromagnetische Ventile ausgebildet sind.

11. Vorrichtung nach Anspruch 8, dadurch gekennzeichnet, daß zur Durchführung der pneumatischen Umschaltungen eine Steuerscheibe (30) vorgesehen ist, die mit Luftnuten (31) versehen ist, die in Segmente mit unterschiedlichen Druckbeaufschlagungen unterteilt ist und daß relativ zur Steuerscheibe (30) eine Abnehmerscheibe (32) mit Abnahmebohrungen (34) rotiert.

12. Vorrichtung nach einem der Ansprüche 8 bis 11, dadurch gekennzeichnet, daß im Bereich der Niederdruckluftversorgung (15) ein Druckluftspeicher (29) angeordnet ist.

13. Vorrichtung nach einem der Ansprüche 8 bis 13, dadurch gekennzeichnet, daß im Bereich der Überleitung ein Druckminderer (25) angeordnet ist, der mindestens bereichsweise den Druckbegrenzer ausbildet.

## Claims

1. Process for the moulding of a container (45) from a thermoplastic synthetic material, in which after a tempering a parison (3) is supplied to a blow station (1) which has a blow mould (2) which is provided for the contour-forming of the container (45) and into which the tempered parison is inserted and in which the parison (3) is expanded by supply of high-pressure blowing air, and in which at least one further pneumatic working step with low-pressure air is carried out, which air is taken from a low-pressure air supply which has a lower pressure level than the high-pressure blowing air and in which high-pressure blowing air flowing out of the moulded container (45) mounted in the blow mould (2) is supplied to the low-pressure air supply (15) during a transitional phase after an expansion of the parison (3) and in which a pressure monitoring to limit a low air pressure provided with a maximum level is carried out in the region of the low-pressure air supply (15) and in which a venting of the container (45) mounted in the blow mould (2) with respect to an ambient pressure is carried out after the transitional phase, and in which the parison (3) is stretched in the direction of a longitudinal axis during its moulding to produce the container (45), characterized in that the parison (3) is stretched by a stretching rod (10) which is positioned by a stretching cylinder (11), that the blow mould (2) is provided with two mould halves (4, 5) which are movable with respect to each other, that the parison (3) is produced by the injection moulding method, stored temporarily thereafter and then tempered and that the transitional phase is carried out after a forming of the contour of the container (45) and before a production of a dimensional stability by cooling and that after the dimensional stability of the container (45) has been achieved the pressure is reduced to ambient pressure and then the container (45) is removed from the blow mould (2).

2. Process according to Claim 1, characterized in that the low-pressure air supply (15) is provided with a low-pressure air supply which is separate and independent of a compressed air transfer from the region of the blow station (1).

3. Process according to Claim 1 or 2, characterized in that low-pressure air is supplied to the container (45) for pre-expansion before the supply of high-pressure blowing air.

4. Process according to one of Claims 1 to 3, characterized in that after the performance of the transfer phase within the container (45) a pressure level is maintained which corresponds to the pressure level within the low-pressure air supply (15).

5. Process according to one of Claims 1 to 4, characterized in that a pressure in the range from 25 to 40 bars is applied to the container by means of the high-pressure blowing air supply (16).

6. Process according to one of Claims 1 to 5, characterized in that a pressure in the range from 10 to 25 bars is applied to the container by means of the low-pressure air supply (15).

7. Process according to one of Claims 1 to 6, characterized in that the low-pressure air supply (15) is used to supply pneumatic structural elements which carry out positioning movements.

8. Device for the moulding of a container (45) from a thermoplastic synthetic material, which has at least one blow station (1) intended for accepting a tempered parison (3) which is provided with a mould (2) which has an inner contour adapted to the container (45) to be moulded and which is provided with a high-pressure blowing air supply (16) for the expansion of the parison (3) and in which at least one structural element in the region of the blow station (1) is connected to a low-pressure air supply (15) for actuation, in which supply low-pressure air is provided which has a lower pressure level than high-pressure blowing air provided in the region of the high-pressure blowing air supply (16) and in which in the region of a connecting element which connects the blow station (1) to the blowing air supply a change-over is arranged which guides high-pressure blowing air into the region of the blow station (1) during a main blowing phase and after an ending of the main blowing phase during a transitional phase forms a connection between the blow station (1) and the low-pressure air supply (15) for blowing air transfer and in which the blow station (1) is connected to an isolating element which vents the container internal chamber with respect to an ambient pressure after an ending of the blowing process and in which the low-pressure air supply (15) has a pressure limiter for monitoring a maximum pressure of the low-pressure air, characterized in that a stretching rod (10) and a stretching cylinder (11) positioning the stretching rod (10) are arranged in the region of the blow station (1) to stretch the parison (3)' that the blow mould (2) is provided with two mould halves (4, 5) which are movable with respect to each other and that a control for the pressure profile is formed in such a way that the transitional phase is carried out after a forming of the contour of the container (45) and before a production of a dimensional stability by cooling.

9. Device according to Claim 8, characterized in that switchable valves (23, 24) are used to carry out the pneumatic change-over processes.

10. Device according to Claim 9, characterized in that the valves (23, 24) are formed as solenoid valves.

11. Device according to Claim 8, characterized in that to carry out the pneumatic change-overs a control disk (30) which is provided with air grooves (31) is provided which is divided into segments with different applied pressures and that a take-off disk (32) with take-off holes (34) rotates with respect to the control disk (30).

12. Device according to one of Claims 8 to 11, characterized in that a compressed air store (29) is arranged in the region of the low-pressure air supply (15).

13. Device according to one of Claims 8 to 12, characterized in that a pressure reducer (25), which forms the pressure limiter at least region-wise, is arranged in the region of the transfer.

## Revendications

1. Procédé de formage d'un récipient (45) à partir d'une matière synthétique thermoplastique dans le cas duquel une ébauche première formée (3), après avoir été amenée à une température convenable, est envoyée à un poste de soufflage (1) comportant une forme ou matrice de soufflage (2) qui a été prévue pour donner son profil au récipient (45) et dans laquelle l'ébauche première formée amenée à la température convenable est introduite, procédé dans le cas duquel, sous l'effet de l'arrivée d'air de soufflage à pression élevée, l'ébauche première formée (3) est dilatée, de même que dans le cas duquel il est effectué au moins une opération de travail pneumatique complémentaire au moyen d'air à basse pression qui est prélevé d'une source d'alimentation en air à basse pression présentant un niveau de pression inférieur à celui de l'air de soufflage à pression élevée, dans le cas duquel, après une dilatation de l'ébauche première formée (3), il est amené à la source d'alimentation en air à basse pression (15), au cours d'une phase de transition, de l'air de soufflage à pression élevée qui s'écoule du récipient formé (45), maintenu dans la forme ou matrice de soufflage (2) et dans le cas duquel, dans la zone de la source d'alimentation en air à basse pression (15), il est effectué une surveillance de la pression afin que la pression de l'air à basse pression soit limitée à un niveau fixé comme maximum, et dans le cas duquel, après la phase de transition, il est produit une désaération du récipient (45), maintenu dans la forme ou matrice de soufflage (2), par rapport à une pression environnante, de même que dans le cas duquel l'ébauche première formée (3), au cours de son formage à l'état de récipient (45), est étirée dans le sens d'un axe longitudinal, le procédé étant caractérisé en ce que l'ébauche première formée (3) est étirée au moyen d'une barre d'étirage (10) qui est positionnée par un cylindre d'étirage (11), en ce que la forme ou matrice de soufflage (2) comporte deux moitiés de forme ou matrice (4, 5) qui sont mobiles l'une par rapport à l'autre, en ce que l'ébauche première formée (3) est fabriquée par le procédé de moulage par injection, est ensuite emmagasinée temporairement et est enfin amenée à la température convenable, et en que la phase de transition a lieu après l'achèvement de la formation du profil du récipient (45) et avant une production d'une stabilité de forme par refroidissement, et en ce qu'après l'obtention de la stabilité de forme du récipient (45), la pression est réduite à la pression environnante et le récipient (45) est retiré de la forme ou matrice de soufflage (2).

2. Procédé suivant la revendication 1, caractérisé en ce que la source d'alimentation en air à basse pression (15) comporte une source d'alimentation en air à basse pression séparée et indépendante d'un passage de transfert d'air sous pression partant de la zone du poste de soufflage (1).

3. Procédé suivant l'une ou l'autre des revendications 1 et 2, caractérisé en qu'au récipient (45), avant l'amenée d'air de soufflage à pression élevée, il est amené de l'air à basse pression en vue de la dilatation préalable.

4. Procédé suivant l'une quelconque des revendications 1 à 3, caractérisé en ce qu'après une exécution de la phase de transfert, à l'intérieur du récipient (45), il est maintenu un niveau de pression qui correspond au niveau de pression régnant à l'intérieur de la source d'alimentation en air à basse pression (15).

5. Procédé suivant l'une quelconque des revendications 1 à 4, caractérisé en ce que par la source d'alimentation en air de soufflage à pression élevée (16), le récipient est sollicité par une pression de l'ordre de 25 à 40 bars.

6. Procédé suivant l'une quelconque des revendications 1 à 5, caractérisé en ce que le récipient, par la source d'alimentation en air à basse pression (15), est sollicité par une pression de l'ordre de 10 à 25 bars.

7. Procédé suivant l'une quelconque des revendications 1 à 6, caractérisé en ce que la source d'alimentation en air à basse pression (15) est utilisée pour l'alimentation d'éléments de construction pneumatiques qui effectuent des mouvements de positionnement.

8. Dispositif destiné au formage d'un récipient (45) à partir d'une matière synthétique thermoplastique qui comporte au moins un poste de soufflage (1) prévu pour recevoir et contenir une ébauche première formée (3) amenée à une température convenable, poste de soufflage (1) muni d'une forme ou matrice (2) qui présente un profil interne répondant à celui du récipient (45) à former et qui, pour la dilatation de l'ébauche première formée (3), est muni d'une source d'alimentation en air de soufflage à pression élevée (16), dispositif dans le cas duquel au moins un élément de construction prévu dans la zone du poste de soufflage (l) pour la mise en action, est relié à une source d'alimentation en air à basse pression (15) laquelle il a été préparé de l'air à basse pression qui présente un niveau de pression inférieur à celui de l'air de soufflage à pression élevée emmagasiné comme provision dans la zone de la source d'alimentation en air de soufflage à pression élevée (16), et dans le cas duquel, dans la zone d'un élément de raccordement qui relie le poste de soufflage (1) à la source d'alimentation en air de soufflage, il est prévu une commande de commutation qui, au cours d'une phase de soufflage principale, envoie de l'air de soufflage à pression élevée dans la zone du poste de soufflage (1) et qui, après un achèvement de la phase de soufflage principale, au cours d'une phase de transition, établit une liaison entre le poste de soufflage (1) et la source d'alimentation en air à basse pression (15) pour le transfert d'air de soufflage, et dans le cas duquel le poste de soufflage (1) est relié à un élément de commande libre qui, après un achèvement de l'opération de soufflage, désaère l'espace interne du récipient par rapport a une pression environnante, et dans le cas duquel la source d'alimentation à basse pression (15) est munie d'un limiteur de pression destiné à la surveillance d'une pression maximale de l'air, à basse pression, le dispositif étant caractérisé en ce que pour l'étirage de l'ébauche première formée (3), dans la zone du poste de soufflage (1), il est prévu une barre d'étirage (10) et un cylindre d'étirage (11) qui positionne la barre d'étirage (10), en ce que la forme ou matrice de soufflage (2) comporte deux moitiés de forme ou matrice (4, 5) mobiles l'une par rapport à l'autre et en ce qu'un réglage pour l'allure de la pression a été prévu de telle sorte que la phase de transition ait lieu après une formation d'achèvement du profil du récipient (45) et avant une production d'une stabilité de forme par refroidissement.

9. Dispositif suivant la revendication 8, caractérisé en ce que pour l'exécution des opérations de commutation pneumatiques, il est utilisé des valves (23, 24) qui peuvent être commandées.

10. Dispositif suivant la revendication 9 caractérisé en ce que les valves (23, 24) ont été prévues sous la forme de valves électromagnétiques.

11. Dispositif suivant la revendication 8, en ce que pour l'exécution des commutations pneumatiques, il a été prévu un disque de commande (30) présentant des canaux à air sous forme de rainures (31) qui sont divisées en segments soumis à des sollicitations par air sous pression différentes et en ce que par rapport au disque de commande (30) tourne un disque récepteur (32) présentant des passages de réception (34).

12. Dispositif suivant l'une quelconque des revendications 8 à 11, caractérisé en ce que dans la zone de l'alimentation en air à basse pression (15), il a été prévu un accumulateur d'air sous pression (29).

13. Dispositif suivant l'une quelconque des revendications 8 à 12 caractérisé en ce que dans la zone du transfert, il a été prévu un réducteur de pression (25) qui, au moins localement , constitue le limiteur de pression.
